# EUROPEAN PATENT APPLICATION

(11) **EP 4 800 959 A1**
(43) Date of publication of application: **02.09.2026**
(21) Application number: 24890568.9
(22) Date of filing: 07.11.2024
(51) Int. Cl.: H04L 5/00

(54) **COMMUNICATION METHOD AND COMMUNICATION APPARATUS**

(30) Priority: 17.11.2023 CN 202311550359
(71) Applicant: Huawei Technologies Co., Ltd., Shenzhen, Guangdong 518129 (CN)
(72) Inventor: WANG, Hanqing, Shenzhen, Guangdong 518129 (CN); GAO, Junhui, Shenzhen, Guangdong 518129 (CN); WANG, Xiaohan, Shenzhen, Guangdong 518129 (CN)
(74) Representative: Körber, Martin Hans
(86) International application number: PCT/CN2024/130652
(87) International publication number: WO 2025/103212

(57) **Abstract**

This application provides a communication method and a communication apparatus. The method includes: receiving a first downlink reference signal and a second downlink reference signal, where both the first downlink reference signal and the second downlink reference signal are carried on resources at a plurality of moments; and sending first information, where the first information indicates a first phase; and the first phase is obtained based on at least one of the first downlink reference signal or the second downlink reference signal.

## Description

This application claims priority to Chinese Patent Application No. 202311550359.1, filed with the China National Intellectual Property Administration on November 17, 2023 and entitled "COMMUNICATION METHOD AND COMMUNICATION APPARATUS", which is incorporated herein by reference in its entirety.

### TECHNICAL FIELD

This application relates to the communication field, and specifically, to a communication method and a communication apparatus.

### BACKGROUND

Coherent joint transmission (coherent joint transmission, CJT) means that a joint transmission weight is calculated based on a joint channel formed by channels between a plurality of network devices and a terminal device, and a same data stream is transmitted to the terminal device, so that signals from the plurality of network devices are coherently superimposed at the terminal device, coherence cancellation is interfered, a received signal to interference and noise ratio (signal to interference and noise ratio, SINR) of the terminal device is improved, and a data transmission rate between the network devices and the terminal device is improved.

However, a prerequisite for implementing coherent joint is to ensure that carrier frequencies of the network devices are the same and phases of transmitted signals are synchronized. In many scenarios, different network devices do not have a common clock source, and because all signal processing, sampling, and carrier generation are performed under clock control, frequencies and phase differences exist between sites. As a result, signals sent between the sites cannot be coherent in the phases, and a CJT transmission effect cannot be ensured.

### SUMMARY

Embodiments of this application provide a communication method and a communication apparatus, to improve communication performance.

According to a first aspect, a communication method is provided. The method may be performed by a terminal device or a module (for example, a chip or a chip system) configured in (or used in) a terminal device. The following uses an example in which the terminal device performs the method for description.

The method includes: The terminal device receives a first downlink reference signal and a second downlink reference signal, where both the first downlink reference signal and the second downlink reference signal are carried on resources at a plurality of moments. The terminal device sends first information, where the first information indicates a first phase. The first phase is obtained based on at least one of the first downlink reference signal or the second downlink reference signal.

For example, the first downlink reference signal is from a first transmission reception point TRP, and the second downlink reference signal is from a second TRP.

According to the foregoing solution, the terminal device receives a plurality of downlink reference signals, and sends the first information to indicate a phase obtained by measuring the plurality of downlink reference signals. Therefore, after obtaining the first information, a network side may determine a phase compensation amount of the signal between the first TRP that sends the first reference signal and the second TRP that sends the second reference signal. The first TRP and the second TRP are TRPs that transmit data for the terminal device in a CJT manner. After the first TRP and the second TRP perform signal phase compensation based on the phase compensation amount, CJT transmission performance can be improved, thereby improving a data transmission rate between the network device and the terminal device. This improves network communication performance.

In an implementation, that the first phase is obtained based on at least one of the first downlink reference signal or the second downlink reference signal includes: The first phase is obtained based on a difference between a first phase variation amount and a second phase variation amount. The first phase variation amount is obtained based on the first downlink reference signal, and the second phase variation amount is obtained based on the second downlink reference signal.

In another implementation, that the first phase is obtained based on at least one of the first downlink reference signal or the second downlink reference signal includes: The first phase is a first phase variation amount or a second phase variation amount.

For example, the first phase variation amount is a phase variation amount obtained by measuring the first downlink reference signal at different moments, and the second phase variation amount is a phase variation amount obtained by measuring the second downlink reference signal at different moments.

According to the two implementations, the terminal device may specifically report the first information to a network side, where the first information indicates a phase variation amount or a phase variation amount difference obtained by measuring a downlink reference signal, so that the network side can determine the phase compensation amount based on the first information, thereby improving the CJT transmission performance.

With reference to the first aspect, in some implementations of the first aspect, the method further includes: The terminal device receives a third downlink reference signal, where the third downlink reference signal is carried on the resources at the plurality of moments. The first information further indicates a second phase, and the second phase is obtained based on the third downlink reference signal.

In an example, the first information includes the first phase variation amount, the second phase variation amount, and a third phase variation amount, the first phase is the first phase variation amount or the second phase variation amount, the second phase is the third phase variation amount, and the third phase variation amount is obtained based on the third downlink reference signal. The first phase variation amount is obtained based on the first downlink reference signal, the second phase variation amount is obtained based on the second downlink reference signal, and the third phase variation amount is obtained based on the third downlink reference signal.

In another example, the first phase is obtained based on the difference between the first phase variation amount and the second phase variation amount, and the second phase is obtained based on a difference between the first phase variation amount and the third phase variation amount.

According to the foregoing solution, more than two TRPs may provide a CJT service for the terminal device. For example, in addition to the first TRP and the second TRP, a third TRP, the first TRP, and the second TRP all provide the CJT service for the terminal device. In this case, the terminal device may further receive the third downlink reference signal transmitted by the third TRP, and report, to the network side, the second phase obtained based on the third downlink reference signal. In this way, the network side can determine a phase compensation amount between three TRPs, and after the signal phase compensation is performed, the CJT transmission performance is improved.

With reference to the first aspect, in some implementations of the first aspect, the first information includes quantized bits of the first phase, and the quantized bits are obtained based on the first phase and a quantization spacing. The quantization spacing is indicated by third information from a network device; or the quantization spacing is determined by the terminal device, the first information further includes fourth information, and the fourth information indicates the quantization spacing.

With reference to the first aspect, in some implementations of the first aspect, the first information further indicates a phase state and first duration that correspond to the first phase, and the phase state and the first duration are for determining the first phase.

According to the foregoing solution, the network side and the terminal device may reach a consensus on a specific indication manner of the first information, so that the terminal device indicates the first phase in a corresponding indication manner, and the network side (for example, the first TRP and/or the second TRP) may interpret the first information in a corresponding manner, to obtain the first phase. This can reduce a case in which an information transmission error is caused because no consensus is reached on the indication manner.

With reference to the first aspect, in some implementations of the first aspect, the first information includes a second quantity, and the second quantity is a quantity of unit time included in the first duration; or the first information includes a second identifier, and the second identifier corresponds to the first duration.

With reference to the first aspect, in some implementations of the first aspect, before the receiving the first downlink reference signal and the second downlink reference signal, the method further includes: The terminal device sends an uplink reference signal, where the first downlink reference signal and the second downlink reference signal are related to the uplink reference signal.

For example, the uplink reference signal is for determining a pre-compensation coefficient, and the first downlink reference signal and the second downlink reference signal are reference signals obtained after pre-compensation based on the pre-compensation coefficient.

According to the foregoing solution, the network side determines, based on a compensation amount obtained by measuring the uplink reference signal of the terminal device, the pre-compensation coefficient for the downlink reference signal, and sends the pre-compensation coefficient to the terminal device to compensate for the downlink reference signal, so that the terminal device improves accuracy of the first phase (for example, the phase variation amount or the phase variation amount difference) that is obtained by the terminal device measuring the downlink reference signal.

With reference to the first aspect, in some implementations of the first aspect, a time interval between either of the first downlink reference signal and the second downlink reference signal and the uplink reference signal is less than or equal to a preset time interval.

According to the foregoing solution, a minimum transmission interval between the downlink reference signal and the uplink reference signal that is associated with the downlink reference signal may be specified, to reduce a case in which the pre-compensation coefficient is inaccurate because of an excessively long interval.

With reference to the first aspect, in some implementations of the first aspect, after the terminal device sends the first information, the method further includes: The terminal device receives data from coherent joint transmission between the first TRP and the second TRP, where the data from coherent joint transmission is obtained by preforming processing based on the first phase.

According to a second aspect, a communication method is provided. The method may be performed by a network device or a module (for example, a chip or a chip system) configured in (or used in) a network device. The following uses an example in which the network device performs the method for description.

The method includes: The network device sends a first downlink reference signal, where the first downlink reference signal is carried on resources at a plurality of moments, and the first downlink reference signal is for obtaining a first phase. The network device receives first information, where the first information indicates a first phase.

With reference to the second aspect, in some implementations of the second aspect, the method further includes: The network device sends second information, where the second information is for configuring a terminal device to receive the first downlink reference signal and a second downlink reference signal, the second downlink reference signal is carried on the resources at the plurality of moments, and the first downlink reference signal and the second downlink reference signal are for obtaining the first phase.

With reference to the second aspect, in some implementations of the second aspect, the first phase is obtained based on a difference between a first phase variation amount and a second phase variation amount, or the first phase is a first phase variation amount and a second phase variation amount. The first phase variation amount is obtained based on the first downlink reference signal, and the second phase variation amount is obtained based on the second downlink reference signal.

With reference to the second aspect, in some implementations of the second aspect, the second phase is a difference between the first phase variation amount and a third phase variation amount; or the second phase is a third phase variation amount. The third phase variation amount is obtained based on a third downlink reference signal, and the third downlink reference signal is a downlink reference signal that is configured for the terminal device and that is carried on the resources at the plurality of moments.

With reference to the second aspect, in some implementations of the second aspect, the first information includes quantized bits of the first phase, and the quantized bits are obtained based on the first phase and a quantization spacing. The quantization spacing is indicated by third information from the network device; or the quantization spacing is determined by the terminal device, the first information further includes fourth information, and the fourth information indicates the quantization spacing.

With reference to the second aspect, in some implementations of the second aspect, the first information further indicates a phase state and first duration that correspond to the first phase, and the phase state and the first duration are for determining the first phase.

With reference to the second aspect, in some implementations of the second aspect, the first information includes a second quantity, and the second quantity is a quantity of unit time included in the first duration; or the first information includes a second identifier, and the second identifier corresponds to the first duration.

With reference to the second aspect, in some implementations of the second aspect, before the network device sends the first downlink reference signal, the method further includes: The network device receives an uplink reference signal, where the first downlink reference signal is related to the uplink reference signal.

With reference to the second aspect, in some implementations of the second aspect, the method further includes: The network device determines a pre-compensation coefficient based on the uplink reference signal, and the first downlink reference signal is a reference signal obtained after pre-compensation based on the pre-compensation coefficient.

With reference to the second aspect, in some implementations of the second aspect, a time interval between the first downlink reference signal and the uplink reference signal is less than or equal to a preset time interval.

With reference to the second aspect, in some implementations of the second aspect, the method is performed by a first TRP, and after the sending the first information, the method further includes: The network device sends data from coherent joint transmission with a second TRP, where the data from coherent joint transmission is obtained by preforming processing based on the first phase.

According to a third aspect, a communication method is provided. The method may be performed by a terminal device or a module (for example, a chip or a chip system) configured in (or used in) a terminal device. The following uses an example in which the terminal device performs the method for description.

The method includes: The terminal device receives a first downlink reference signal and a second downlink reference signal, where both the first downlink reference signal and the second downlink reference signal are carried on resources at a plurality of moments. The terminal device sends first information, where the first information indicates a first frequency. The first frequency is obtained based on at least one of the first downlink reference signal or the second downlink reference signal.

According to a fourth aspect, a communication method is provided. The method may be performed by a network device or a module (for example, a chip or a chip system) configured in (or used in) a network device. The following uses an example in which the network device performs the method for description.

The method includes: The network device sends a first downlink reference signal, where the first downlink reference signal is carried on resources at a plurality of moments, and the first downlink reference signal is for obtaining a first frequency. The network device receives first information, where the first information indicates the first frequency.

According to a fifth aspect, a communication method is provided. The method may be performed by a terminal device or a module (for example, a chip or a chip system) configured in (or used in) a terminal device. The following uses an example in which the terminal device performs the method for description.

The method includes: The terminal device receives a first downlink reference signal, where both the first downlink reference signal is carried on resources at a plurality of moments. The terminal device sends first information, where the first information indicates a first phase (or a first frequency). The first phase (or the first frequency) is obtained based on the first downlink reference signal.

According to a sixth aspect, a communication apparatus is provided. In a design, the apparatus may include a module in one-to-one correspondence with the method/operation/step/action according to the first aspect, the third aspect, or any one of implementations in the first aspect or the third aspect. The module may be a hardware circuit, may be software, or may be implemented by a combination of a hardware circuit and software. In a design, the apparatus includes a transceiver unit. The transceiver unit is configured to receive a first downlink reference signal and a second downlink reference signal, where both the first downlink reference signal and the second downlink reference signal are carried on resources at a plurality of moments. The transceiver unit sends first information, where the first information indicates a first phase (or a first frequency). The first phase (or the first frequency) is obtained based on at least one of the first downlink reference signal or the second downlink reference signal.

According to a seventh aspect, a communication apparatus is provided. In a design, the apparatus may include a module in one-to-one correspondence with the method/operation/step/action according to the first aspect or any one of implementations in the first aspect. The module may be a hardware circuit, may be software, or may be implemented by a combination of a hardware circuit and software. In a design, the apparatus includes: a transceiver unit, configured to send a first downlink reference signal, where the first downlink reference signal is carried on resources at a plurality of moments, and the first downlink reference signal is for obtaining a first frequency; the transceiver unit, further configured to receive first information, where the first information indicates a first phase (or a first frequency); and a processing unit, configured to determine the first phase (or the first frequency) based on the first information.

According to an eighth aspect, a communication apparatus is provided, including a processor. The processor may implement the method according to any one of the first aspect to the fifth aspect, and the possible implementations of the first aspect to the fifth aspect. Optionally, the communication apparatus further includes a memory. The processor is coupled to the memory, and may be configured to execute instructions in the memory, to implement the method according to any one of the first aspect to the fifth aspect, and the possible implementations of the first aspect to the fifth aspect. Optionally, the communication apparatus further includes a communication interface, and the processor is coupled to the communication interface. In embodiments of this application, the communication interface may be a transceiver, a pin, a circuit, a bus, a module, or another type of communication interface. This is not limited.

In an implementation, the communication apparatus is a communication device (for example, a terminal device or an access network device). When the communication apparatus is the communication device, the communication interface may be a transceiver or an input/output interface.

In another implementation, the communication apparatus is a chip configured in the communication device. When the communication apparatus is the chip configured in the communication device, the communication interface may be an input/output interface.

Optionally, the transceiver may be a transceiver circuit. Optionally, the input/output interface may be an input/output circuit.

According to a ninth aspect, a processor is provided, including an input circuit, an output circuit, and a processing circuit. The processing circuit is configured to: receive a signal through the input circuit, and transmit the signal through the output circuit, to cause the processor to perform the method according to any one of the first aspect to the fifth aspect, and the possible implementations of the first aspect to the fifth aspect.

During a specific implementation, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a tenth aspect, a computer program product is provided. The computer program product includes a computer program (which may be also referred to as code or instructions). When the computer program is run, a computer is caused to perform the method according to any one of the first aspect to the fifth aspect, and the possible implementations of the first aspect to the fifth aspect.

According to an eleventh aspect, a computer-readable storage medium is provided. The computer-readable storage medium stores a computer program (which may also be referred to as code or instructions). When the computer program is run on a computer, the computer is caused to perform the method according to any one of the first aspect to the fifth aspect, and the possible implementations of the first aspect to the fifth aspect.

According to a twelfth aspect, a communication system is provided, including at least one of the foregoing terminal devices and at least one of the foregoing TRPs.

### BRIEF DESCRIPTION OF DRAWINGS

FIG. 1 is a diagram of a communication system to which an embodiment of this application is applicable.
FIG. 2 is another diagram of a communication system to which an embodiment of this application is applicable.
FIG. 3 is a schematic flowchart of a communication method according to this application;
FIG. 4 is a diagram of downlink reference signal resource mapping according to this application;
FIG. 5 is another schematic flowchart of a communication method according to an embodiment of this application;
FIG. 6 is a diagram of an application scenario according to an embodiment of this application;
FIG. 7 is a block diagram of a communication apparatus according to an embodiment of this application; and
FIG. 8 is another diagram of a structure of a communication apparatus according to an embodiment of this application.

### DESCRIPTION OF EMBODIMENTS

The following describes technical solutions in this application with reference to the accompanying drawings.

In embodiments of this application, "/" may represent an "or" relationship between associated objects, for example, A/B may represent A or B; and "and/or" may represent that there are three relationships between the associated objects, for example, A and/or B may represent the following three cases: Only A exists, both A and B exist, and only B exists, where A and B may be singular or plural. For ease of describing the technical solutions in embodiments of this application, terms such as "first" and "second" may be used for differentiation in embodiments of this application. The terms such as "first" and "second" do not limit a quantity or an execution order, and the terms such as "first" and "second" do not indicate a definite difference. In embodiments of this application, a term like "example" or "for example" is used to represent an example, evidence, or a description. Any embodiment or design solution described as an "example" or "for example" should not be explained as being more preferred or having more advantages than another embodiment or design solution. Use of the words such as "example" or "for example" is intended to present a relative concept in a specific manner for ease of understanding. In embodiments of this application, "at least one (type)" may alternatively be described as "one (type) or more (types)", and "a plurality of (types)" may be two (types), three (types), four (types), or more (types). This is not limited in this application.

The technical solutions in embodiments of this application may be applied to various communication systems, for example, a long term evolution (long term evolution, LTE) system, a 5th generation (5th generation, 5G) communication system, a wireless fidelity (wireless fidelity, Wi-Fi) system; and the communication method provided in this application may further be applied to a communication system that is evolved after 5G, for example, a 6th generation (6th generation, 6G) communication system, a future communication system, or another communication system. This is not limited in this application.

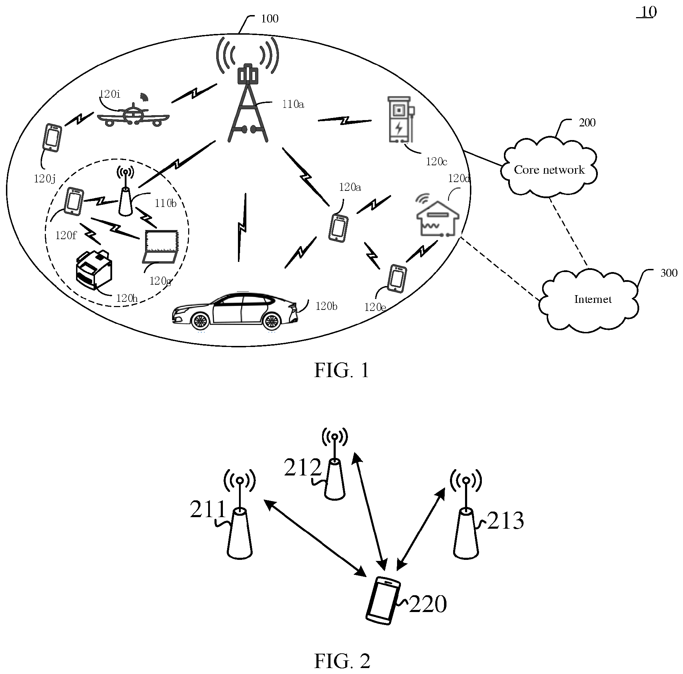

FIG. 1 is a diagram of a possible and non-limiting system. As shown in FIG. 1, a communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. An access network node (or referred to as the RAN node) 110 is connected to the core network 200 in a wireless or wired manner. A core network device in the core network 200 and the access network node 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G or 5G mobile communication system or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates the foregoing two or more systems.

The access network node 110 may also be sometimes referred to as an access network device, a RAN entity, an access node, or the like, and constitutes a part of the communication system, to help a terminal implement radio access. A plurality of access network nodes 110 in the communication system 10 may be nodes of a same type, or may be nodes of different types. In some scenarios, roles of the access network node 110 and the terminal 120 are relative. For example, a network element 120i in FIG. 1 may be a helicopter or an uncrewed aerial vehicle, and may be configured as a mobile base station. For a terminal 120j that accesses the RAN 100 through the network element 120i, the network element 120i is a base station. However, for a base station 110a, the network element 120i is a terminal. The access network node 110 and the terminal 120 are both referred to as communication apparatuses sometimes. For example, network elements 110a and 110b in FIG. 1 may be understood as communication apparatuses having a base station function, and network elements 120a to 120j may be understood as communication apparatuses having a terminal function.

In a possible scenario, the access network node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communication system, a base station in a future mobile communication system, an access node in a Wi-Fi system, or the like. The access network node may be a macro base station (for example, 110a in FIG. 1), a micro base station or an indoor station (for example, 110b in FIG. 1), a relay node or a donor node, or a radio controller in a CRAN scenario. Optionally, the access network node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or a part of functions of the access network node in this application may alternatively be implemented by a software function running on hardware, or may be implemented by a virtualization function instantiated on a platform (for example, a cloud platform). The access network node in this application may alternatively be a logical node, a logical module, or software that can implement all or the part of the functions of the access network node.

In another possible scenario, a plurality of access network nodes cooperate to assist the terminal in implementing radio access, and different access network nodes respectively implement parts of functions of a base station. For example, the access network node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

The terminal may alternatively be referred to as a terminal device, user equipment (user equipment, UE), a mobile station, a mobile terminal, or the like. The terminal may be widely used in various scenarios for communication. The scenarios include, for example, but are not limited to, at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), D2D, V2X, machine-type communication (machine-type communication, MTC), internet of things (internet of things, IOT), virtual reality, augmented reality, industrial control, autonomous driving, telemedicine, a smart grid, smart furniture, smart office, smart wearable, smart transportation, a sensing terminal, a terminal with integrated sensing and communication, or a smart city. The terminal may be a mobile phone (for example, 120a, 120j, and 120e in FIG. 1), a tablet computer, a computer with a wireless transceiver function (for example, 120g in FIG. 1), customer-premises equipment (customer-premises equipment, CPE), a smart point of sale (point of sale, POS) machine, a wearable device, a vehicle (for example, 120b in FIG. 1), an uncrewed aerial vehicle, a helicopter, an airplane (for example, 120i in FIG. 1), a ship, a robot, a robot arm, a sensor, a perceptron, a smart home device (for example, 120h in FIG. 1), or the like.

FIG. 2 is a diagram of another system to which an embodiment of this application is applicable. The system may include a plurality of transmission points, for example, a transmission point 211, a transmission point 212, and a transmission point 213 shown in FIG. 2. The transmission point may be a transmission and reception point (transmission and reception point, TRP) having an information sending and receiving function. The system may further include at least one terminal device, for example, a terminal device 220 shown in FIG. 2. A plurality of TRPs shown in FIG. 2 may communicate with the terminal device 220 in a manner of coordination of a plurality of transmission points. For example, the plurality of TRPs may communicate with the terminal device in a coherent joint transmission (coherent joint transmission, CJT) manner. The plurality of TRPs transmit a same data stream to the terminal device in a joint transmission manner, so that signals are coherently superimposed at the terminal device, coherence cancellation is interfered, a received signal to interference and noise ratio (signal to interference and noise, SINR) of the terminal device is greatly improved, and a data transmission rate between a network device and the terminal device is improved.

In embodiments of this application, a TRP may be an access network node. For example, the TRP may be a network device (for example, an access network device), or the TRP may be configured on a network device. For example, the TRP may be a baseband unit (baseband unit, BBU), a remote radio unit (remote radio unit, RRU), or a distributed unit (distributed unit, DU) of a network device. Alternatively, the TRP may be an antenna panel or an antenna port group of the network device. A specific form of the TRP is not limited in this application. It should be understood that, the TRP and the network device in this application may be replaced with each other.

An operation that is performed by a network side and that is described in this embodiment of this application may be performed by a TRP on the network side, and the TRP may be a TRP participating in CJT of the terminal device. Alternatively, different operations performed by the network side may be performed by different apparatuses on the network side. For example, different operations may be separately performed by the CU and the DU. This is not limited in this application.

Currently, a problem of non-ideal clock synchronization between TRPs is resolved through reciprocity calibration of the TRPs. Specifically, calibration pilots are transmitted between the TRPs to estimate a calibration coefficient between the TRPs. The calibration coefficient is for compensating for an amplitude, a phase, and latency of a receive channel or a transmit channel between the TRPs, to ensure that a ratio of a response of each transmit channel to a response of each receive channel between the TRPs is a constant, thereby compensating for impact caused by the non-ideal clock synchronization.

The following briefly analyzes the method. In a scenario in which the TRP 1 and the TRP 2 do not have a common clock source, reciprocity calibration is performed between the two TRPs by sending pilots to each other. A calibration pilot symbol sent by the TRP 1 and the TRP 2 to each other is denoted as s, and a received signal that is of a calibration pilot sent by the TRP 1 to the TRP 2 and that is at the TRP 2 is
${Y}_{1 \to 2} = {e}^{- j 2 π ⋅ Δ {τ}_{syn 2} ⋅ k} ⋅ {e}^{- j 2 π ⋅ Δ {f}_{2} ⋅ t} ⋅ {η}_{2 , r} ⋅ {h}_{1 \to 2} ⋅ {η}_{t , 1} ⋅ {e}^{j 2 π ⋅ Δ {f}_{1} ⋅ t} ⋅ {e}^{j 2 π ⋅ Δ {τ}_{syn 1} ⋅ k} ⋅ s$

Similarly, a received signal that is of a calibration pilot sent by the TRP 2 to the TRP 1 and that is at the TRP 1 is
${Y}_{2 \to 1} = {e}^{- j 2 π ⋅ Δ {τ}_{syn 1} ⋅ k} ⋅ {e}^{- j 2 π ⋅ Δ {f}_{1} ⋅ t} ⋅ {η}_{1 , r} ⋅ {h}_{2 \to 1} ⋅ {η}_{t , 2} ⋅ {e}^{j 2 π ⋅ Δ {f}_{2} ⋅ t} ⋅ {e}^{j 2 π ⋅ Δ {τ}_{syn 2} ⋅ k} ⋅ s$
where *k* is a subband identifier, *t* is a time identifier, and
Δ*τ*_{*syn*1} and Δ*τ*_{*syn*2} respectively represent deviations between standard time and timing of the TRP 1 and timing of the TRP 2.
Δ*f*₁ and Δ*f*₂ respectively represent deviations between carrier frequencies generated by the TRP 1 and the TRP 2 and a standard frequency.
*η*_{1,*r*} and *η*_{2,*r*} respectively represent receive channel responses of the TRP 1 and the TRP 2, and include the amplitude, the phase, and the latency of the receive channel. Correspondingly, *η*_{1,*t*} and *η*_{2,t} respectively represent transmit channel responses of the TRP 1 and the TRP 2, and include the amplitude, the phase, and the latency of the transmit channel. The foregoing parameters are caused by hardware characteristics of the transmit and receive channels, and therefore, change slowly as time elapses.
*h*_{1→2} and *h*_{2→1} respectively represent an air interface channel response from the TRP 1 to the TRP 2 and an air interface channel response from the TRP 2 to the TRP 1. Because of channel reciprocity, *h*_{1→2} is equal to *h*_{2→1},

In this case, the calibration coefficient may be obtained by dividing a calibration pilot received signal of the TRP 2 by a calibration pilot received signal of the TRP 1, and is given by using the following formula:
$C = \frac{{Y}_{1 \to 2}}{{Y}_{2 \to 1}} = \frac{{η}_{t , 1} ⋅ {η}_{2 , r}}{{η}_{1 , r} ⋅ {η}_{t , 2}} ⋅ {e}^{j 2 π ⋅ \left(-2\left(Δ{f}_{2}-Δ{f}_{1}\right)\right) ⋅ t} ⋅ {e}^{j 2 π ⋅ \left(-2\left(Δ{τ}_{syn 2}-Δ{τ}_{syn 1}\right)\right) ⋅ k}$

After compensation of the foregoing calibration coefficient, proportions of responses of the receive and transmit channels of the TRP 1 and the TRP 2 are equal, that is, the following feature is met:
$\frac{{η}_{1 , r} ⋅ {e}^{- j 2 π ⋅ Δ {f}_{1} ⋅ t} ⋅ {e}^{- j 2 π ⋅ Δ {τ}_{syn 1} ⋅ k}}{{η}_{t , 1} ⋅ {e}^{j 2 π ⋅ Δ {f}_{1} ⋅ t} ⋅ {e}^{j 2 π ⋅ Δ {τ}_{syn 1} ⋅ k}} = \frac{{η}_{2 , r} ⋅ {e}^{- j 2 π ⋅ Δ {f}_{2} ⋅ t} ⋅ {e}^{- j 2 π ⋅ Δ {τ}_{syn 2} ⋅ k}}{C ⋅ {η}_{t , 2} ⋅ {e}^{j 2 π ⋅ Δ {f}_{2} ⋅ t} ⋅ {e}^{j 2 π ⋅ Δ {τ}_{syn 2} ⋅ k}}$

It can be learned from further analysis of Formula (1) that, to ensure that characteristics provided by Formula (2) is met at each moment, the calibration coefficient *C* needs to change as time elapses, which is mainly reflected by an item *e*^{*j2π·*(-2(Δ*f*₂*-*Δ*f*₁))*·t*} in Formula (1). In other words, a frequency deviation causes a phase difference between TRPs accumulated as time elapses. However, only a calibration coefficient *C* corresponding to a calibration moment can be obtained in a manner of mutual pilot transmission between the TRPs. Because channel compensation is performed between two calibration moments by using a calibration coefficient obtained at a previous calibration moment, a phase difference that is accumulated as time elapses because of a frequency deviation cannot be compensated in real time, especially in a case in which a time interval between two times of calibration is long and the phase difference accumulated as time elapses exceeds 180⁰. For the foregoing problem, this application proposes that the terminal device measures and reports a related parameter, to assist the network side in estimating a frequency deviation Δ*f*₂ - Δ*f*₁, to compensate for an accumulated phase difference caused by the frequency deviation.

If the TRP 1 and the TRP 2 do not have a common clock source, reference carrier frequencies of the TRP 1 and the TRP 2 are *f_{c}*, and carriers generated by the TRP 1 and the TRP 2 respectively have frequency deviations Δ₁ and Δ₂ In this case, carrier frequencies of the TRP 1 and the TRP 2 are respectively ${f}_{c}^{TRP 1} = {f}_{c} \times \left(1+{Δ}_{1}\right)$ and ${f}_{c}^{TRP 2} = {f}_{c} \times \left(1+{Δ}_{2}\right)$*.* Correspondingly, Δ*f*₁ = Δ₁ × *f*_{c} and Δ*f*₂ = Δ₂ × *f*_{c}. When the TRP 1 and the TRP 2 complete the foregoing mutual pilot transmission for calibration, it can be ensured that signal phases of the transmit channels of the TRP 1 and the TRP 2 are the same. After time *t*, an accumulated phase difference between the transmitted signals of the TRP 1 and the TRP 2 is 2π × *f_{c}* × (Δ₁ - Δ₂) × *t*, that is, 2π × (Δ*f*₁ - Δ*f*₂) × *t.* For example, if *f_{c}*=3.5 GHz, considering that a clock precision indicator Δ₁ - Δ₂ is at a level of 1 × 10⁻¹⁰, in this case, within 20 ms, an accumulated phase difference between the TRPs caused by the frequency deviation is 50°. In this case, even if the air interface channel does not change, the transmitted signals of the TRP 1 and the TRP 2 cannot be coherently superposed on the terminal device because of the phase difference, and interference cannot be completely eliminated. Consequently, CJT transmission performance deteriorates.

If the phase difference between the transmitted signal of the TRPs needs to be compensated in time, the TRPs need to frequently perform mutual pilot transmission for calibration. However, because air interface resources are limited, calibration pilot interference is avoided, and the like, an interval at which pilots are mutually transmitted over an air interface between any pair of TRPs is generally at a level of seconds, a typical value is 3.3s. However, the accumulated phase difference caused by the frequency deviation changes greatly after about dozens of milliseconds. Therefore, if only inter-TRP calibration is required to correct impact caused by a non-ideal clock, the CJT transmission performance cannot be ensured.

For the foregoing problem, this application proposes that the terminal device may perform measurement and report a related parameter, to assist the network side in compensating for a phase difference between the TRPs that is accumulated as time elapses because of the frequency deviation between the TRPs, thereby improving the CJT transmission performance.

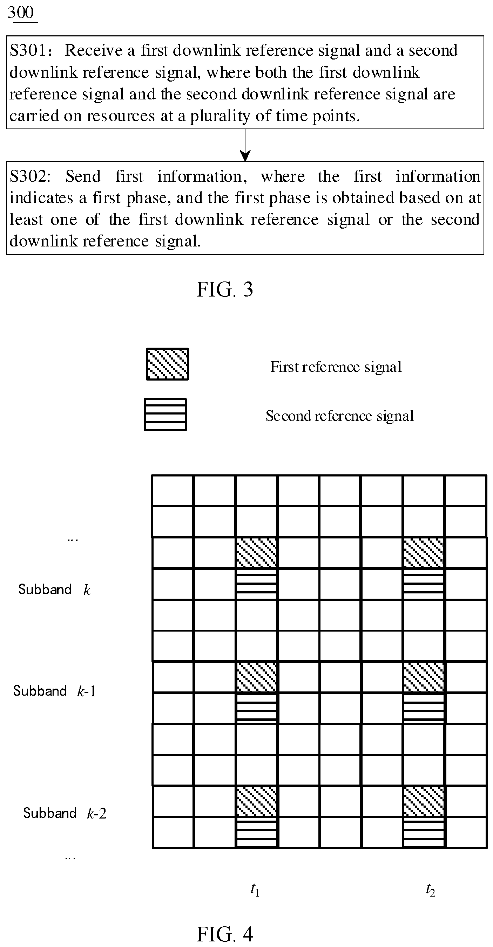

FIG. 3 is a schematic flowchart of a communication method 300 according to an embodiment of this application. The method may include but is not limited to S301 and S302.

S301: A terminal device receives a first downlink reference signal and a second downlink reference signal, where both the first downlink reference signal and the second downlink reference signal are carried on resources at a plurality of moments.

For example, the plurality of moments at which each of the first downlink reference signal and the second downlink reference signal is carried may be different orthogonal frequency division multiplexing (orthogonal frequency division multiplexing, OFDM) symbols in one or more slots. For example, the plurality of moments may be different OFDM symbols in one slot. Alternatively, the plurality of moments may be a plurality of OFDM symbols in a plurality of slots. For example, the plurality of moments may be OFDM symbols in different slots, that is, one moment is one OFDM symbol in one slot, and different moments are OFDM symbols in different slots. For another example, the plurality of moments may include different OFDM symbols of at least two moments that are in a same slot and OFDM symbols of at least two moments that are in different slots. This is not limited in this application.

For example, the first downlink reference signal and/or the second downlink reference signal may be a channel state information-reference signal (channel state information-reference signal, CSI-RS) or a tracking reference signal (tracking reference signal, TRS).

For example, the first downlink reference signal and the second downlink reference signal may be TRSs, and the TRSs may be carried on a plurality of OFDM symbols. For example, the TRSs may be carried on two OFDM symbols in a same slot.

For another example, each of the first downlink reference signal and the second downlink reference signal may include CSI-RSs carried on a plurality of CSI-RS resources, the plurality of CSI-RS resources may be located in a plurality of slots that are adjacent or similar to each other, and the plurality of CSI-RS resources are mapped to a same location in frequency domain.

As shown in FIG. 4, a first downlink reference signal and a second downlink reference signal carry resources at a plurality of moments. The plurality of moments include a moment t1 and a moment t2, and the plurality of moments may further include another moment that is not shown in FIG. 4. For example, the resources at the plurality of moments may be resources on different OFDM symbols in one or more slots. The first downlink reference signal and the second downlink reference signal may be alternatively distributed on a plurality of subbands, for example, a subband k, a subband k-1, and a subband k-2. The plurality of subbands may further include another subband. The subbands are different frequency domain resources for carrying a reference signal. For example, a subband may be a resource element (resource element, RE). Each resource block (resource block, RB) may have a part or all of REs for carrying a downlink reference signal. A specific frequency domain location for carrying the reference signal may be determined based on a configuration on the network side (for example, may be determined based on the frequency domain resource configured based on second information).

The first downlink reference signal and the second downlink reference signal that are received by the terminal device are respectively from a first TRP and a second TRP, and the first TRP and the second TRP are TRPs that transmit data to a terminal in a CJT manner (or in a required CJT manner). The terminal device may receive the second information from the network side (for example, the first TRP or the second TRP), and the second information is for configuring the terminal device to receive the first downlink reference signal and the second downlink reference signal.

For example, the second information may be reference signal resource configuration information, for example, may be CSI-RS resource configuration information. Optionally, the second information may be carried in a radio resource control (radio resource control, RRC) message.

Specifically, the second information may configure a sequence, a time-frequency resource, and the like of each of the first downlink reference signal and the second downlink reference signal. The terminal device may receive the first downlink reference signal and the second downlink reference signal based on the second information.

The first downlink reference signal and the second downlink reference signal that are configured by the second information may be reference signals carried on different reference signal resources, or reference signals carried on different reference signal resource sets, or the first downlink reference signal and the second downlink reference signal may be reference signals that are carried on a same reference signal resource and that are sent by different reference signal ports. The terminal device may specifically separately receive the first downlink reference signal and the second downlink reference signal based on the configuration of the second information. A specific transmission manner of the first downlink reference signal and the second downlink reference signal is not limited in this application.

Optionally, the second information may further include CSI reporting configuration information. For example, the CSI reporting configuration information may configure a reported parameter, a reference signal resource configuration associated with CSI reporting, and the like. The terminal device may report the related parameter to the network side based on the CSI reporting configuration information and a plurality of received downlink reference signals, to compensate for a time-variant phase difference between the plurality of TRPs caused by a frequency deviation.

The network side configures the terminal device to measure the downlink reference signals sent by the plurality of TRPs, so that the network side obtains the related parameter, to compensate for the time-variant phase difference between the plurality of TRPs caused by the frequency deviation and improve CJT transmission performance. Therefore, a data transmission rate between the network side and the terminal device is improved.

It should be understood that, the terminal device may receive the downlink reference signal and feed back a corresponding parameter based only on the configuration on the network side, and the terminal device does not need to learn of a TRP from which each reference signal comes.

S302: The terminal device sends first information, where the first information indicates a first phase, and the first phase is obtained based on at least one of the first downlink reference signal or the second downlink reference signal.

The terminal device measures the received first downlink reference signal and the received second downlink reference signal, to obtain the first phase.

In an implementation 1, the first phase is a first phase variation amount or a second phase variation amount, where the first phase variation amount is obtained based on the first downlink reference signal, and the second phase variation amount is obtained based on the second downlink reference signal.

Specifically, the first phase variation amount is a phase variation amount obtained by measuring the first downlink reference signal received at different moments. In an example shown in FIG. 4, the terminal device separately measures the first downlink reference signal received at the moment t1 and the moment t2, to obtain a first phase variation amount *Δθ*₁, which may be represented as:
${Δθ}_{1} = {θ}_{1 , {t}_{2}} - {θ}_{1 , {t}_{1}}$
where *θ*_{1,t₁} is a phase obtained by measuring the first downlink reference signal received at the moment t1, and *θ*_{1,t2} is a phase obtained by measuring the first downlink reference signal received at the moment t2. The phase variation amount *Δθ*₁ may be the first phase variation amount. Similarly, a second phase variation amount *Δθ*₂ is a phase variation amount obtained by measuring the second downlink reference signal received at different moments. The terminal device separately measures the second downlink reference signal received at the moment t1 and the moment t2, to obtain the second phase variation amount *Δθ*₂, which may be represented as:
${Δθ}_{2} = {θ}_{2 , {t}_{2}} - {θ}_{2 , {t}_{1}}$
where *θ*_{2,*t*₁} is a phase obtained by measuring the second downlink reference signal received at the moment t1, and *θ*_{2,*t*₂} is a phase obtained by measuring the second downlink reference signal received at the moment t2. The phase variation amount *Δθ*₂ may be the second phase variation amount. It should be understood that, this is not limited in this application. A downlink reference signal (for example, the first downlink reference signal and the second downlink reference signal) may be further carried at a moment other than the moment t1 and the moment t2, and time intervals between two adjacent moments are equal. A phase variation amount (for example, the first phase variation amounts and the second phase variation amount) measured based on a corresponding downlink reference signal may be an average value of phase variation amounts obtained by measuring the downlink reference signal (for example, the first downlink reference signal and the second downlink reference signal) between each of a plurality of adjacent moments. In addition, the phase variation amount (for example, the first phase variation amount and the second phase variation amount) may be an average value of phase variation amounts obtained by measuring a corresponding downlink reference signal (for example, the first downlink reference signal and the second downlink reference signal) on a plurality of subbands. For example, the downlink reference signal is carried on M subbands, and the terminal device may separately measure the downlink reference signal on the M subbands to obtain a corresponding phase variation amount. Using the second downlink reference signal as an example, the terminal device measures the second downlink reference signal on the subband m at a moment *t*₁ to obtain a phase ${θ}_{2 , {t}_{1}}^{m}$, and measures the second downlink reference signal on the subband m at a moment *t*₂ to obtain a phase ${θ}_{2 , {t}_{2}}^{m}$. In this case, the phase variation amount obtained by the terminal device measuring the second downlink reference signal on the subband m is ${Δθ}_{2}^{m} = {θ}_{2 , {t}_{2}}^{m} - {θ}_{2 , {t}_{1}}^{m}$. Then, the terminal device may average the phase variation amounts measured on the M subbands, to obtain a second phase variation amount $Δ \overline{{θ}_{2}} = \frac{1}{M} {\sum }_{m = 1}^{M} {Δθ}_{2}^{m}$. The first phase variation amount may also be obtained in a same manner.

In the example shown in FIG. 4, both the first downlink reference signal and the second downlink reference signal are carried at the moment t1 and the moment t2, that is, the plurality of moments at which the first downlink reference signal and the second downlink reference signal are carried completely overlap with each other. However, this is not limited in this application. In an implementation, a plurality of moments at which the first downlink reference signal is carried and a plurality of moments at which the second downlink reference signal is carried may partially or completely overlap with each other. For example, the first downlink reference signal may be carried at a moment t1 and a moment t2, and the second downlink reference signal may be carried at a moment t3 and a moment t4.

In the implementation 1, the first information sent by the terminal device may indicate the first phase variation amount and the second phase variation amount. The network side (for example, the first TRP and/or the second TRP) receives the first information, and determines a signal phase compensation amount between the first TRP and the second TRP based on the first information reported by the terminal device. The phase compensation amount is for compensating for a phase difference between the plurality of TRPs that is accumulated as time elapses and that is caused by the frequency deviation. After the first TRP and/or the second TRP perform/performs phase compensation on a signal, the CJT transmission performance can be improved. A specific manner of performing phase compensation may be that the first TRP and the second TRP separately perform signal phase compensation based on the first phase variation amount and the second phase variation amount that are reported by the terminal device. Alternatively, one of the first TRP or the second TRP may perform signal phase compensation. For example, one TRP may determine, based on the first phase reported by the terminal device, a difference between the first phase variation amount and the second phase variation amount, and perform signal phase compensation based on the difference. An example in which one of the TRPs performs signal phase compensation is used. The TRP that performs signal phase compensation may determine a frequency deviation *Δf* between the two TRPs based on a difference between the first phase variation amount and the second phase variation amount, and then perform phase compensation. For example, for a moment t, a phase compensation amount of a corresponding TRP is 2π × *Δf* × *t.*

The terminal device may obtain the CSI reporting configuration information delivered by the network side. As described above, the CSI reporting configuration information may be included in the second information. However, this is not limited in this application. Alternatively, the CSI reporting configuration information may not be included in the second information and sent by the network side to the terminal device. For example, the CSI reporting configuration information and the second information may be respectively sent by the network side to the terminal device. Alternatively, the CSI reporting configuration information is included in other information. For example, the CSI reporting configuration information may be carried in an RRC message. The CSI reporting configuration information may indicate the reported parameter reported by the terminal device to the network side. For example, in the implementation 1, the CSI reporting configuration information may indicate the terminal device to report the phase variation amount obtained by measuring the downlink reference signal, and the terminal device may determine, based on the CSI reporting configuration information, that the first information sent to the network side includes the first phase variation amount and the second phase variation amount.

Optionally, if in addition to the first TRP and the second TRP, a third TRP further provides a CJT service for the terminal device, the terminal device further receives a third downlink reference signal, where the third downlink reference signal is carried on the resources at the plurality of moments. The terminal device may measure the third downlink reference signal to obtain a third phase variation amount. For details, refer to the foregoing implementation in which the terminal device obtains the first phase variation amount and the second phase variation amount. Details are not described herein again. The first information sent by the terminal device further indicates the third phase variation amount, that is, the first information indicates the first phase variation amount, the second phase variation amount, and the third phase variation amount. The network side may determine the signal phase compensation amount between the first TRP and the second TRP based on the first information reported by the terminal device. The phase compensation amount is for compensating for a phase difference between three TRPs that is accumulated as time elapses and that is caused by the frequency deviation. Transmission performance of the CJT manner can be improved.

In an implementation 2, the first phase is obtained based on a difference between the first phase variation amount and the second phase variation amount.

For example, refer to the foregoing description. The terminal device may separately measure the first downlink reference signal and the second downlink reference signal to obtain the first phase variation amount *Δθ*₁ and the second phase variation amount *Δθ*₂, and then may determine that a difference *Δθ*₂₁= *Δθ*₂ *- Δθ*₁ between the second phase variation amount and the first phase variation amount. The first phase in the first information reported by the terminal device is the phase variation amount difference *Δθ*₂₁. The network side (for example, the first TRP and/or the second TRP) receives the first information, and determines a signal phase compensation amount between the first TRP and the second TRP based on the first information. The phase compensation amount is for compensating for a phase difference between the plurality of TRPs that is accumulated as time elapses and that is caused by the frequency deviation. After performing phase compensation on the signal, the first TRP and/or the second TRP data to the terminal device in a CJT manner, so that the CJT transmission performance can be improved. For a specific compensation manner, refer to the foregoing description. Details are not described herein again.

The terminal device may obtain the CSI reporting configuration information delivered by the network side. The CSI reporting configuration information may indicate a type of a measurement result reported by the terminal device to the network side. For example, in the first implementation, the CSI reporting configuration information may indicate the terminal device to report the phase variation amount difference, and the terminal device may determine, based on the CSI reporting configuration information, that the first information sent to the network side includes the difference between the second phase variation amount and the first phase variation amount.

Optionally, the terminal device further receives a third downlink reference signal, wherein the third downlink reference signal is carried on resources at a plurality of moments. The plurality of moments may be the same as the plurality of moments at which the first downlink reference signal and the second downlink reference signal are carried. The first information further indicates a second phase, and the second phase is obtained based on the third downlink reference signal.

For example, three TRPs provide the CJT service for the terminal device, and the three TRPs include a first TRP, a second TRP, and a third TRP. Therefore, to assist the network side in performing phase compensation, in addition to receiving the first downlink reference signal and the second downlink reference signal, the terminal device further receives the third downlink reference signal, where the third downlink reference signal is sent by the third TRP. The network side may configure, based on an actual quantity of TRPs that need to participate in CJT of the terminal device, the terminal device to receive a corresponding quantity of downlink reference signals.

For example, the first phase is a difference between the first phase variation amount *Δθ*₁ and the second phase variation amount *Δθ*₂, and the second phase is a difference between the first phase variation amount *Δθ*₁ and a third phase variation amount *Δθ*₃. The third phase variation amount is obtained based on the third downlink reference signal. For example, the third phase variation amount is a phase variation amount obtained by measuring the third downlink reference signal at different moments.

When a plurality of TRPs (for example, the foregoing three TRPs) provide a CJT service for the terminal device, the network side configures the terminal device to measure a plurality of downlink reference signals sent by the plurality of TRPs, and the network side may indicate the terminal device to use a phase variation amount measured based on one of the plurality of downlink reference signals as a reference, and report a phase variation amount difference. For example, the network device may send indication information to the terminal device, where the indication information indicates which downlink reference signal in the plurality of downlink reference signals is used as a reference downlink reference signal. The indication information may be included in the CSI reporting configuration information described above. However, this is not limited in this application. The indication information may also be included in other information.

For example, in this embodiment of this application, the indication information may indicate that the first downlink reference signal is a reference signal as the reference, and the indication information may include a resource identifier of the first downlink reference signal. The terminal device may determine, based on the indication information, that a phase variation amount obtained by measuring the first downlink reference signal in the plurality of downlink reference signals is used as a reference phase variation amount. Specifically, after determining to measure the plurality of downlink reference signals to obtain a plurality of corresponding phase variation amounts, the terminal device uses the first phase variation amount *Δθ*₁ as the reference phase variation amount, and separately compares the first phase variation amount with other phase variation amounts to obtain the phase variation amount difference. For example, the terminal device may obtain a difference between the second phase variation amount *Δθ*₂ and the first phase variation amount *Δθ*₁, that is, the first phase. The terminal device may further obtain a difference between the third phase variation amount *Δθ*₃ and the first phase variation amount *Δθ*₁, that is, the second phase. The first information sent by the terminal device to the network device indicates the first phase and the second phase.

According to the foregoing two implementations, the terminal device receives a plurality of downlink reference signals, and sends first information, where the first information indicates a phase variation amount (for example, the implementation 1) obtained based on measurement of the plurality of downlink reference signals or a phase variation amount difference (for example, the implementation 2) obtained based on the measurement. After obtaining the first information, the network side may determine a signal phase compensation amount between a plurality of TRPs corresponding to the plurality of reference signals. In this way, a phase difference that is accumulated as time elapses and that is caused by a frequency deviation between the TRPs is compensated based on the phase compensation amount, so that CJT transmission performance can be improved.

The following describes an example of a specific manner in which the first information indicates the first phase.

In an example 1, the first information includes quantized bits of the first phase.

A quantity of bits occupied by the first phase in the first information may be predefined or may be preconfigured by using signaling (for example, may be configured by using the CSI reporting configuration information). The quantity of bits is a quantity of quantized bits of the first phase. After obtaining the first phase through measurement, the terminal device may quantize the first phase based on the quantity of bits to obtain the quantized bits of the first phase, and report the quantized bits to the network side by using the first information.

Specifically, the terminal device may quantize the first phase in a uniform quantization manner or a non-uniform quantization manner.

For example, the terminal device quantizes the first phase in the uniform quantization manner, that is, quantizes the first phase by using an equal quantization spacing. The quantization spacing is a unit phase of quantization. The quantization spacing may be predefined. The quantized bits of the first phase in the first information include bits indicating that the first phase is a positive value or a negative value, and the quantized bits further include a binary mode of a first quantity. The first quantity is a quantity of quantization spacings included in the first phase.

After obtaining the first phase through measurement, the terminal device may quantize the first phase based on a determined quantization spacing *Δθᵤ* and a determined quantity of quantized bits. The quantized bits may further include 1 bit indicating whether the first phase is a positive value or a negative value. For example, a highest bit of the quantized bits indicates a positive or negative sign of the first phase, and subsequent bits indicate a binary mode of the first quantity. Using quantization of the first phase variation amount *Δθ*₁ as an example, the terminal device may determine a first quantity K as follows: $K = \left⌊\frac{\left|{Δθ}_{1}\right|}{{Δθ}_{u}}\right⌋$

In the formula, a symbol |·| indicates to use an absolute value, and $\left⌊⋅\right⌋$ indicates to round a number down to the nearest integer.

For example, if a quantity of quantized bits of *Δθ*₁ is 4, the first bit indicates *Δθ*₁ is a positive value or a negative value, for example, the bit of 1 represents *Δθ*₁ is a positive value, the bit of 0 represents *Δθ*₁ is a negative value, and subsequent 3 bits represents a binary mode of K. If *Δθ*₁ is a positive value and K=6, the quantized bits of the first phase are 1110. After receiving the first information, the network side may obtain *Δθ*₁ *= K* × *Δθᵤ* based on the first quantity K and the quantization spacing *Δθᵤ.*

For example, the terminal device may specifically use without limitation to the following three manners (a manner 1 to a manner 3) to determine the quantization spacing *Δθᵤ.*

Manner 1: A protocol predefines a quantization spacing as *Δθ*ᵤ, and after determining the first phase, the terminal device may quantize the first phase based on the predefined quantization spacing.

Manner 2: The protocol predefines a plurality of candidate quantization spacings, and the network side (for example, the first TRP and/or the second TRP) may send third information to the terminal device, where the third information indicates one of the plurality of candidate quantization spacings, and indicates the terminal device to quantize the first phase by using the quantization spacing. If the third information includes an identifier of the quantization spacing, the terminal device determines, based on the identifier included in the third information, a quantization spacing *Δθᵤ* corresponding to the identifier in the plurality of predefined candidate quantization spacings, and the terminal device quantizes the first phase by using the quantization spacing. For example, the third information may be carried in the CSI reporting configuration information, or the third information may be carried in other information sent by the network side to the terminal device. This is not limited in this application.

Manner 3: The protocol predefines a plurality of candidate quantization spacings, the terminal device determines, from the plurality of predefined candidate quantization spacings, a quantization spacing *Δθᵤ* for quantization, the terminal device quantizes the first phase by using the quantization spacing, and the terminal device further sends fourth information to the network device, where the fourth information indicates the quantization spacing *Δθᵤ*, so that the network side can determine, based on the fourth information, the quantization spacing used by the terminal device. For example, the fourth information may be included in the first information.

For another example, the terminal device may also quantize the first phase in the non-uniform quantization manner, that is, quantization spacings used quantization are not equal to each other.

In an example 2, the first information includes an identifier of a phase state corresponding to the first phase and quantized bits for first duration.

For the implementation 1, an example in which the first phase is the first phase variation amount *Δθ*₁ is used. The first phase variation amount is a phase variation amount obtained by the terminal device by measuring the first downlink reference signal at the moment*t*₁ and the moment *t*₂ . A frequency deviation corresponding to the first phase variation amount is *Δf₁ = Δθ*₁/2*π*(*t*₂ - *t*₁). A plurality of candidate phase states and corresponding identifiers may be predefined. For example, the plurality of candidate phase states may include *π*/4, *π*/2, and *π*, and the corresponding identifiers are respectively 0, 1, and 2. The terminal device may determine a phase state from the plurality of phase variation amounts based on the first phase variation amount *Δθ*₁, for example *π*/2*.* The terminal device may determine, based on *Δf*₁, that a time change amount *t*₂ - *t*₁ is reduced/increased to the first duration *Δt*₁ when *Δθ*₁ is reduced/increased to *π*/2, that is:
${Δf}_{1} = \frac{{Δθ}_{1}}{2 π ⋅ \left({t}_{2}-{t}_{1}\right)} = \frac{π}{2} \times \frac{1}{2 {πΔt}_{1}}$

The first information sent by the terminal device may include an identifier of the phase state *π*/2, that is, an identifier 1, and quantized bits of the first duration *Δt*₁. For a specific quantization manner, refer to the quantization manner of the first phase in the example 1. Details are not described herein again. A quantity of quantized bits and/or a quantization spacing of the first duration may be predefined, or may be indicated by the network device by using signaling (for example, through the CSI reporting configuration information). For example, *Δf*₁ = 0.2 Hz. The terminal device may determine that a phase variation amount after duration of 1250 ms (that is, an example of the first duration) is *π*/2*.* In this case, the terminal device may obtain 12 after quantizing the first duration of 1250 ms by using a quantization spacing corresponding to the duration (for example, a quantization spacing is 100 ms) and convert the quantized duration of 1250 ms into a binary mode, that is, the quantized bits of the first duration. The first information sent by the terminal device includes the identifier 1 and the quantized bits of the first duration.

For the implementation 2, the first phase is the difference *Δθ*₂₁ between the second phase variation amount and the first phase variation amount, that is, a phase variation amount difference obtained by the terminal device measuring the first reference signal and the second reference signal at the moment *t*₁ and the moment *t*₂. A frequency deviation corresponding to the phase variation amount difference is *Δ̅f̅ = Δθ*₂₁/2π·(*t*₂ - *t*₁). The terminal device may determine a phase state from the plurality of candidate phase states, and determine, based on *Δ̅f̅,* duration (that is, another example of the first duration) that has elapsed when the phase variation amount is in the phase state. The terminal device may quantize the duration to obtain quantized bits of the duration. The first information sent by the terminal device may include an identifier of the phase state determined by the terminal device and the quantized bits of the duration.

The foregoing describes that the terminal device may select one phase state from the plurality of candidate phase states. However, this is not limited in this application. In another manner, one phase state may be predefined or may be preconfigured by the network side by using the signaling (for example, preconfigured by using the CSI reporting measurement information). After performing measurement, the terminal device may determine the frequency deviation, and determine, based on the frequency deviation, duration, that is, the first duration, to which a corresponding time change amount reduced/increased when the phase variation amount is reduced/increased to the phase state. The first information sent by the terminal device includes the quantized bits of the first duration.

If the first information further includes the second phase and/or another phase, an indication manner the same as that of the first phase may be used for indication. Details are not described herein again.

The network side and the terminal device may reach a consensus on a specific indication manner of the first information, so that the terminal device indicates the first phase in a corresponding indication manner, and the network side (for example, the first TRP and/or the second TRP) may interpret the first information in a corresponding manner, to obtain the first phase. This can reduce a case in which an information transmission error is caused because no consensus is reached on the indication manner.

Duration corresponding to the first phase may be predefined. For example, the duration may be duration from the moment t1 to the moment t2. Alternatively, the first information further indicates the first duration, and the first phase is specifically a phase variation amount in the first duration, or a phase variation amount difference in the first duration.

For example, a specific manner in which the first information indicates the first duration may be that the first information includes quantized bits of the first duration. For example, the first information may include a second quantity, and the second quantity is a quantity of unit time included in the first duration. For example, unit time may be a duration of a time domain symbol, a millisecond, a second, or the like. Alternatively, the first information may include a second identifier, and the second identifier corresponds to the first duration. The network device and the terminal device may reach a consensus on the specific indication manner of the first information, thereby reducing the case in which the information transmission error is caused because no consensus is reached on the indication manner.

It should be noted that, the foregoing describes that after receiving the first downlink reference signal and the second downlink reference signal, the terminal device reports the first phase (the first phase may be the phase variation amount or the phase variation amount difference) to the network side, and the network side may determine the phase compensation amount based on the first phase, to compensate for the phase difference that is accumulated as time elapses and that is caused by the frequency deviation between the TRPs. This application further provides another embodiment. The terminal device receives a first downlink reference signal and a second downlink reference signal, and the terminal device sends first information, where the first information indicates a first frequency. The first frequency is determined based on at least one of the first downlink reference signal or the second downlink reference signal

In a manner, the first frequency may be a first frequency deviation or a second frequency deviation, the first frequency deviation is obtained based on the first downlink reference signal, and the first frequency deviation is an estimated value of a deviation between a carrier frequency of the first TRP and a standard frequency. In other words, according to the manner described above, the first frequency deviation may be represented as:
${Δf}_{1} = \frac{{Δθ}_{1}}{2 π ⋅ \left({t}_{2}-{t}_{1}\right)} ,$ and
the second frequency deviation is obtained based on the second downlink reference signal, the second frequency deviation is an estimated value of a deviation between a carrier frequency of the second TRP and a standard frequency, and the second frequency deviation may be represented as:
${Δf}_{2} = \frac{{Δθ}_{2}}{2 π ⋅ \left({t}_{2}-{t}_{1}\right)} .$

In another manner, the first frequency may be a difference *Δ̅f̅* between the first frequency deviation and the second frequency deviation, and *Δ̅f̅* may be obtained in the following manner:
$\overline{Δf} = {Δf}_{2} - {Δf}_{1} = \frac{{Δθ}_{2} - {Δθ}_{1}}{2 π ⋅ \left({t}_{2}-{t}_{1}\right)}$

The terminal device may report the first frequency to the network side. After obtaining the first frequency, the network side may compensate for a time-variant phase difference between the plurality of TRPs caused by the frequency deviation. Specifically, the terminal device may obtain CSI reporting configuration information delivered by the network side, and the CSI reporting configuration information may indicate a reported parameter of the terminal device. If the CSI reporting configuration information may indicate the terminal device to report the frequency deviation, the first information sent by the terminal device includes the first frequency deviation and the second frequency deviation. If the CSI reporting configuration information may indicate the terminal device to report a frequency deviation difference, the first information sent by the terminal device includes a difference the first frequency deviation and the second frequency deviation.

The first information may include quantized bits of the first frequency. The terminal device may determine a frequency quantization spacing, quantize the first frequency, and send to the network side by using the first information. For a specific manner in which the terminal device determines the quantized bits of the first frequency, refer to the manner in which the terminal device determines the quantized bits of the first phase that is described in the example 1. Details are not described herein again.

It should be understood that, in this application, same or similar parts in embodiments may be implemented with reference to each other. Details are not described one by one.

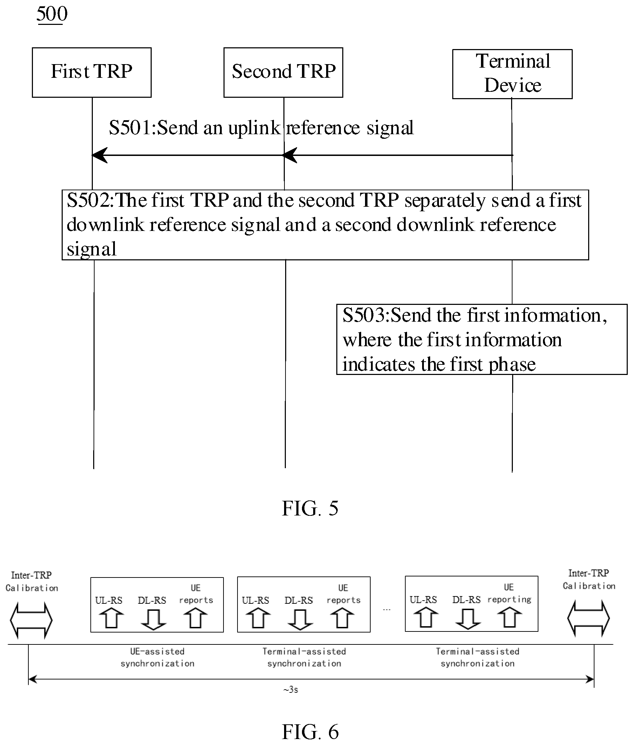

In an implementation, the first downlink reference signal and the second downlink reference signal that are received by the terminal device may be pre-compensated reference signals. The following provides descriptions with reference to FIG. 5. FIG. 5 is a schematic flowchart of a communication method 500 according to an embodiment of this application. The method may include but is not limited to S501 to S503.

S501: A terminal device sends an uplink reference signal.

For example, the uplink reference signal may be a sounding reference signal (sounding reference signal, SRS) or another uplink reference signal.

Correspondingly, a first TRP and a second TRP respectively receive the uplink reference signal from the terminal device. The uplink reference signal is for determining a pre-compensation coefficient. A received signal obtained by the first TRP when the first TRP receives the uplink reference signal at a moment *t*₀ is *Y*_{*UE*→1}. For example, *Y*_{*UE*→1} may be represented as:
${Y}_{UE \to 1} = {h}_{1}^{UL - RS} {s}_{UL} = {h}_{1} ⋅ {η}_{1 , r} ⋅ {e}^{j 2 π ⋅ \left(-Δ{f}_{1}\right) ⋅ {t}_{0}} ⋅ {e}^{j 2 π ⋅ \left(-Δ{τ}_{syn 1}\right) ⋅ k} ⋅ {s}_{UL}$
where *h*₁ is an air interface channel response from the terminal device to the first TRP, *η*_{1,*r*} represents a receive channel response of the first TRP, and includes an amplitude, a phase, and latency of a receive channel, Δ*f*₁ represents a frequency deviation of a carrier frequency of the first TRP relative to a standard frequency, and Δ*τ*_{*syn*1} represents a deviation of the timing of the first TRP relative to the standard time. *k* is a subband identifier. It should be noted that, in this application, a signal on a subband k is used as an example to describe a solution for an expression of a received/transmitted signal of a reference signal, and the subband identifier k is omitted from a symbol for representing the received/transmitted signal, a channel response, and the like. In addition, another subband may be implemented by using the subband k as a reference.

A received signal obtained by the second TRP when the second TRP receives the uplink reference signal at the moment *t*₀ is *Y*_{*UE*→2}. For example, *Y*_{*UE*→2} may be represented as:
${Y}_{UE \to 2} = {h}_{2}^{UL - RS} {s}_{UL} = {h}_{2} ⋅ {η}_{2 , r} ⋅ {e}^{j 2 π ⋅ \left(-Δ{f}_{2}\right) ⋅ {t}_{0}} ⋅ {e}^{j 2 π ⋅ \left(-Δ{τ}_{syn 2}\right) ⋅ k} ⋅ {s}_{UL}$
where *h*₂ is an air interface channel response from the terminal device to the second TRP, *η*_{2*,r*} represents a receive channel response of the second TRP, and includes an amplitude, a phase, and latency of a receive channel, Δ*f*₂ represents a frequency deviation of a carrier frequency of the second TRP relative to a standard frequency, and Δ*τ*_{*syn*2} represents a deviation of the timing of the second TRP relative to the standard time.

After receiving the uplink reference signal, the first TRP and the second TRP may determine a pre-compensation coefficient C_{UL}. The pre-compensation coefficient may be used to perform pre-compensation on a downlink reference signal sent in S502 below. For example, the compensation coefficient C_{UL} may be expressed as:
${C}_{UL} = \frac{{Y}_{UE \to 2}}{{Y}_{UE \to 1}} = \frac{{h}_{2}^{UL - RS}}{{h}_{1}^{UL - RS}} = \frac{{h}_{2} ⋅ {η}_{2 , r} ⋅ {e}^{j 2 π ⋅ \left(-Δ{f}_{2}\right) ⋅ {t}_{0}} ⋅ {e}^{j 2 π ⋅ \left(-Δ{τ}_{syn 2}\right) ⋅ k}}{{h}_{1} ⋅ {η}_{1 , r} ⋅ {e}^{j 2 π ⋅ \left(-Δ{f}_{1}\right) ⋅ {t}_{0}} ⋅ {e}^{j 2 π ⋅ \left(-Δ{τ}_{syn 1}\right) ⋅ k}}$

To determine the pre-compensation coefficient, the first TRP may exchange a received signal *Y*_{*UE*→1} with the second TRP by using a backhaul link, and the second TRP calculates the pre-compensation coefficient; or the second TRP may exchange a received signal *Y*_{*UE*→2} with the first TRP by using a backhaul link, and the first TRP calculates the pre-compensation coefficient. This is not limited in this application.

S502: The first TRP and the second TRP respectively send a first downlink reference signal and a second downlink reference signal to the terminal device.

The first TRP (and/or the second TRP) may perform pre-compensation on the first downlink reference signal (and/or the second downlink reference signal) based on the pre-compensation coefficient C_{UL} and a calibration coefficient *C* between the TRPs. The calibration coefficient *C* of the first TRP and the second TRP may be obtained in the foregoing manner of exchanging a calibration pilot (or the reference signal) over the air interface. For details, refer to the foregoing related technical description. Details are not described herein again.

Specifically, in a manner of pre-compensation for the downlink reference signal, the first TRP may compensate for the first downlink reference signal based on the calibration coefficient C_{UL} and *C*, the second TRP may compensate for the first downlink reference signal based on the calibration coefficient C_{UL} and *C,* or the first TRP and the second TRP may separately compensate for the first downlink reference signal and the second downlink reference signal after negotiating with each other. This is not limited in this application.

For example, the second TRP compensates for the second downlink reference signal based on the pre-compensation coefficient C_{UL} and the calibration coefficient *C.*

The second downlink reference signal sent by the second TRP may be represented as:
${s}_{2} = \frac{c}{{C}_{UL}} ⋅ {s}_{DL - RS 2} ,$ and
a corresponding received signal of the terminal device is:
${Y}_{2 \to UE} = {h}_{2}^{DL - RS} \frac{C}{{C}_{UL}} ⋅ {S}_{DL - RS 2} = {h}_{2} ⋅ {η}_{2 , t} ⋅ {e}^{j 2 π Δ {f}_{2} ⋅ t} ⋅ \frac{C}{{C}_{UL}} ⋅ {S}_{DL - RS 2} ,$
where *η*_{2,*t*} represents a transmit channel response of the second TRP, and includes an amplitude, a phase, and latency of the transmit channel. The terminal device may determine, received signal at the moment *t*₁ (that is, *t* = *t*₁ in the foregoing formula)and based on the moment *t*₂ (that is, *t = t*₂ in the foregoing formula), a second phase variation amount *Δθ*₂ corresponding to the second downlink reference signal.

The first downlink reference signal sent by the first TRP is *s*_{*DL*-*RS*1}, and a corresponding received signal of the terminal device is
${Y}_{1 \to UE} = {H}_{1}^{DL - RS} ⋅ {s}_{DL - RS 1} = {h}_{1} ⋅ {η}_{1 , t} ⋅ {e}^{j 2 π Δ {f}_{1} ⋅ t} ,$

The terminal device may determine, received signal at the moment t₂ (that is, *t* =*t*₂ in the foregoing formula) and based on the moment *t*₁ (that is, *t* = *t*₁ in the foregoing formula), a first phase variation amount *Δθ*₁

The following processing may be performed on the received signals *Y*_{1→*UE*} and *Y*_{2→*UE*,} to obtain: $\begin{matrix}\frac{{Y}_{2 \to UE}}{{Y}_{1 \to UE}} = \frac{C}{{C}_{UL}} \times \frac{{h}_{2}^{DL - RS}}{{h}_{1}^{DL - RS}} \\ = \frac{\frac{{η}_{t , 1} ⋅ {η}_{2 , r}}{{η}_{t , r} ⋅ {η}_{t , 2}} ⋅ {e}^{j 2 π ⋅ \left(-2\left(Δ{f}_{2}-Δ{f}_{1}\right)\right) ⋅ {t}_{TRP}} ⋅ {e}^{j 2 π ⋅ \left(-2\left(Δ{τ}_{syn 2}-Δ{τ}_{syn 1}\right)\right) ⋅ k}}{\frac{{h}_{2} ⋅ {η}_{2 , r}}{{h}_{1} ⋅ {η}_{1 , r}} {e}^{j 2 π ⋅ \left(-\left(Δ{f}_{2}-Δ{f}_{1}\right)\right) ⋅ {t}_{0}} ⋅ {e}^{j 2 π ⋅ \left(-\left(Δ{τ}_{syn 2}-Δ{τ}_{syn 1}\right)\right) ⋅ k}} \times \frac{{h}_{2} ⋅ {η}_{2 , t}}{{h}_{1} ⋅ {η}_{1 , t}} ⋅ {e}^{j 2 π ⋅ \left(Δ{f}_{2}-Δ{f}_{1}\right) ⋅ t} ⋅ \\ {e}^{j 2 π ⋅ \left(Δ{τ}_{syn 2}-Δ{τ}_{syn 1}\right) ⋅ k} = {e}^{j 2 π ⋅ \left(Δ{f}_{2}-Δ{f}_{1}\right) ⋅ \left(t+{t}_{0}-2{t}_{TRP}\right)}\end{matrix}$
where *t_{TRP}* is a moment at which inter-TRP calibration is performed and the calibration coefficient *C* is obtained. It can be learned from the foregoing formula that, based on a plurality of moments, for example, the moment *t*₂ and the moment *t*₁, a phase variation amount difference measured by the received first downlink reference signal and the received second downlink reference signal is *Δθ*₂₁ = *2π* · (Δ*f*₂ - Δ*f*₁) · (*t*₂ - *t*₁). The terminal device may report the phase variation amount difference to a network side by using first information in S503, or the terminal device may report the first phase variation amount and the second phase variation amount to the network side by using the first information in S503, and the network side determines the phase variation amount difference. In this way, the network side may determine the signal phase compensation amount between the first TRP and the second TRP based on the first information reported by the terminal device. The phase compensation amount is for compensating for a phase difference between the TRPs that is accumulated as time elapses and that is caused by the frequency deviation. After the first TRP and/or the second TRP perform/performs phase compensation on a signal, transmission performance of the CJT manner can be improved.

S503: The terminal device sends the first information, where the first information includes a first phase.

For details about S503, refer to S302 in the embodiment shown in FIG. 3. Details are not described herein again.

In an implementation, the first information includes the first phase variation amount *Δθ*₁ and the second phase variation amount *Δθ*₂ that are reported by the terminal device to the network side, the network side may determine a difference between the first phase variation amount *Δθ*₁ and the second phase variation amount *Δθ*₂, and *Δθ*₂₁ *= Δθ*₂-*Δθ*₁. The network side may perform phase compensation on signals of the TRP 1 and/or the TRP 2 based on the phase variation amount difference. For example, the network side may obtain an estimated value *Δ̅f̅* of the frequency deviation based on the phase variation amount difference. For example, *Δ̅f̅* may be expressed as:
$\overline{Δf} = Δ {f}_{2} - Δ {f}_{1} = \frac{{Δθ}_{2} - {Δθ}_{1}}{2 π ⋅ \left({t}_{2}-{t}_{1}\right)}$

The network side may perform phase compensation on the signals of the TRP 1 and/or the TRP 2 based on the estimated value of the frequency deviation. For example, phase compensation is performed on the TRP 1. At the moment t, a phase that needs to be compensated for the TRP 1 is 2π × *Δf × t.*

In another implementation, the terminal device may report the difference *Δθ*₂₁ between the first phase variation amount and the second phase variation amount to the network side by using the first information, and the network side performs phase compensation on the signals of the TRP 1 and/or the TRP 2 based on the difference. For example, the network side performs phase compensation on the signals of the TRP 1 and/or the TRP 2 based on the estimated value *Δ̅f̅* of the difference frequency deviation and based on the estimated value of the frequency deviation. Therefore, after signal phase compensation, when the first TRP and the second TRP transmit data to the terminal device in the CJT manner, CJT transmission performance can be improved.

In an implementation, a time interval between either of the first downlink reference signal and the second downlink reference signal and the uplink reference signal is less than or equal to a preset time interval. In other words, a minimum transmission interval between the downlink reference signal and the uplink reference signal that is associated with the downlink reference signal may be specified, to possibly avoid a case in which the pre-compensation coefficient is inaccurate because of an excessively long interval.

In an implementation, as shown in FIG. 6, a network side may configure, in a calibration operation of two adjacent TRPs of a plurality of TRPs participating in the CJT, the terminal device to measure downlink reference signals sent by the plurality of TRPs and report related information, so that the terminal device assists the TRPs in implementing clock synchronization, to compensate for a signal phase difference between the TRPs that is caused by time varying of an inter-TRP calibration coefficient between calibration of the two adjacent TRPs, thereby improving transmission performance and reliability of the CJT.

Embodiments shown in FIG. 3 and FIG. 5 describe a manner in which one terminal device receives a plurality of downlink reference signals sent by a plurality of TRPs, and measures and reports a phase variation amount or a phase variation amount difference, to assist a network side in compensating for a phase difference that is accumulated as time elapses and that is caused by a frequency deviation between the TRPs. In another implementation, the network side may configure a plurality of terminal devices to respectively receive downlink reference signals sent by different TRPs. The plurality of terminal devices respectively measure received downlink reference signals, and respectively report, to the network side, phase variation amounts obtained by measuring the received downlink reference signals. For example, a first terminal device receives a first downlink reference signal, and reports a first phase variation amount obtained by measuring the first downlink reference signal; a second terminal device receives a second downlink reference signal, and reports a second phase variation amount obtained by measuring the second downlink reference signal; and after obtaining the first phase variation amount and the second phase variation amount, the network side determines a phase compensation amount, to compensate for a phase difference that is accumulated as time elapses and that is caused by a frequency deviation between a first TRP that sends the first downlink reference signal and a second TRP that sends the second downlink reference signal, to improve CJT transmission performance.

It may be understood that, to implement the functions in the foregoing embodiments, a TRP on a network side and a terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware in a manner of hardware driven by computer software depends on particular application scenarios and design constraints of the technical solutions.

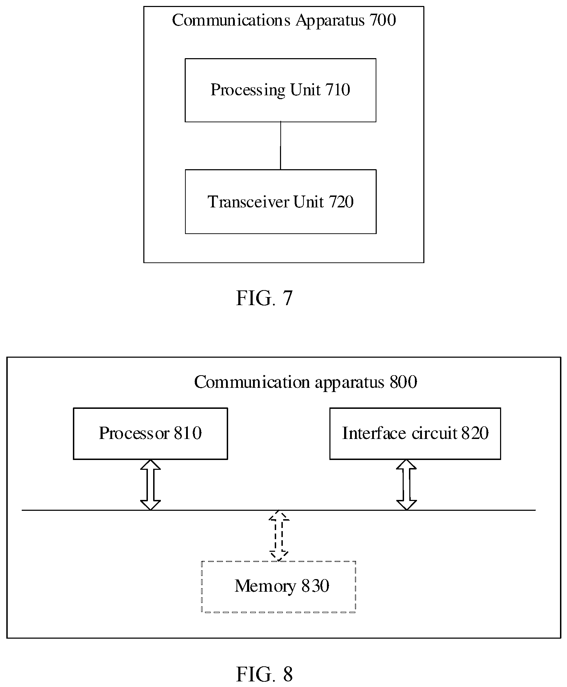

FIG. 7 and FIG. 8 each are a diagram of a possible structure of a communication apparatus according to an embodiment of this application. These communication apparatuses may be configured to implement functions of the terminal device or the TRP in the foregoing method embodiments, and therefore can also implement beneficial effects of the foregoing method embodiments. In embodiments of this application, the communication apparatus may be one of the terminals 120a to 120j as shown in FIG. 1, the network device 110a or 110b as shown in FIG. 1, or a module (for example, a chip or a chip system) used in the terminal or the network device.

A communication apparatus 700 includes a transceiver unit 720, and the transceiver unit 720 may be configured to receive or send information. The communication apparatus 700 may further include a processing unit 710, and the processing unit 710 may be configured to process instructions or data, to implement a corresponding operation.

It should be understood that, when the communication apparatus 700 is a chip disposed in (or used for) a communication device, the transceiver unit 720 in the communication apparatus 700 may be an input/output interface or a circuit of the chip, and the processing unit 710 in the communication apparatus 700 may be a processor in the chip.

Optionally, the communication apparatus 700 may further include a storage unit. The storage unit may be configured to store instructions or data. The processing unit 710 may execute the instructions or the data stored in the storage unit, to cause the communication apparatus to implement a corresponding operation.

The communication apparatus 700 may be configured to implement functions of the terminal device or the TRP in the method embodiments shown in FIG. 3 and FIG. 5.

When the communication apparatus 700 is configured to implement the function of the terminal device in the method embodiment shown in FIG. 3, the transceiver unit 720 is configured to receive a first downlink reference signal and a second downlink reference signal, where both the first downlink reference signal and the second downlink reference signal are carried on resources at a plurality of moments. The processing unit 710 is configured to determine first information, where the first information indicates a first phase. The first phase is obtained based on at least one of the first downlink reference signal or the second downlink reference signal. The transceiver unit 720 is further configured to send the first information.

When the communication apparatus 700 is configured to implement the function of the TRP in the method embodiment shown in FIG. 3, the transceiver unit 720 is configured to send a first downlink reference signal, wherein the first downlink reference signal is carried on resources at a plurality of moments, and the first downlink reference signal is for obtaining a first phase. The transceiver unit 720 is further configured to receive first information, where the first information indicates a first phase. The processing unit 720 is configured to determine the first phase based on the first information.

For more detailed descriptions about the processing unit 710 and the transceiver unit 720, refer to related descriptions in the method embodiments shown in FIG. 3.

It should be understood that, the transceiver unit 720 in the communication apparatus 700 may be implemented through a communication interface (for example, a transceiver, a transceiver circuit, an input/output interface, or a pin), and when the communication interface is the transceiver, the transceiver may include a receiver and/or a transmitter. The processing unit 710 in the communication apparatus 700 may be implemented by using at least one processor, or the processing unit 710 in the communication apparatus 700 may be implemented by using at least one logic circuit. Optionally, the communication apparatus 700 further includes the storage unit, and the storage unit may be implemented by using a memory.

As shown in FIG. 8, a communication apparatus 800 includes a processor 810 and an interface circuit 820. The processor 810 and the interface circuit 820 are coupled to each other. It may be understood that, the interface circuit 820 may be a transceiver or an input/output interface. Optionally, the communication apparatus 800 may further include a memory 830 configured to store instructions to be executed by the processor 810, store input data required by the processor 810 to run the instructions, or store data generated after the processor 810 runs the instructions.

In an implementation, the memory 830 may be integrated into the processor 810, or may be independent of the processor 810.

When the communication apparatus 800 is configured to implement the method shown in FIG. 3, the processor 810 is configured to implement a function of the foregoing processing unit 710, and the interface circuit 820 is configured to implement a function of the foregoing transceiver unit 720.

When the foregoing communication apparatus is a chip used in a terminal device, the chip in the terminal device may implement the function of the terminal device in the method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device may implement the function of the TRP in the foregoing method embodiments. The module in the network device receives information from another module (for example, a radio frequency module or an antenna) in the network device, where the information is sent by the terminal device to the network device. Alternatively, the module in the network device sends information to another module (for example, a radio frequency module or an antenna) in the network device, where the information is sent by the network device to the terminal device. The module in the network device herein may be a baseband chip in the network device, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any regular processor, or the like.

The method steps in embodiments of this application may be implemented in hardware, or may be implemented in software instructions executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. The storage medium may be a component of the processor. The processor and the storage medium may be disposed in an ASIC. In addition, the ASIC may be located in the access network device or the terminal device. The processor and the storage medium may also exist the access network device or the terminal device as discrete components.

According to the methods provided in embodiments of this application, this application further provides a computer program product. The computer program product includes computer program code. When the computer program code is executed by one or more processors, an apparatus including the processor is caused to perform the methods according to embodiments shown in FIG. 3 and FIG. 5.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, procedures or functions in embodiments of this application are all or partially executed. The computer may be a general-purpose computer, a dedicated computer, a computer network, a network device, user equipment, or another programmable apparatus.

According to the methods provided in embodiments of this application, an embodiment of this application further provides a computer-readable storage medium, and the computer-readable storage medium stores the computer programs or instructions. When the computer program or instructions are run by one or more processors, an apparatus including the processor is caused to perform the methods according to embodiments shown in FIG. 3 and FIG. 5.

The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

According to the method provided in embodiments of this application, an embodiment of this application further provides a communication system, including the foregoing one or more terminal devices. The system may further include one or more TRPs described above.

In the several embodiments provided in this application, it may be understood that, the disclosed system, apparatus, and method may be implemented in other manners. For example, the foregoing apparatus is merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on an actual requirement to achieve the objectives of the solutions.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a first downlink reference signal and a second downlink reference signal, wherein both the first downlink reference signal and the second downlink reference signal are carried on resources at a plurality of moments; and
sending first information, wherein the first information indicates a first phase; wherein
the first phase is obtained based on at least one of the first downlink reference signal or the second downlink reference signal.

2. The method according to claim 1, wherein that the first phase is obtained based on at least one of the first downlink reference signal or the second downlink reference signal comprises:
the first phase is obtained based on a difference between a first phase variation amount and a second phase variation amount, or
the first phase is a first phase variation amount or a second phase variation amount, wherein
the first phase variation amount is obtained based on the first downlink reference signal, and the second phase variation amount is obtained based on the second downlink reference signal.

3. The method according to claim 1 or 2, wherein the method further comprises:
receiving a third downlink reference signal, wherein the third downlink reference signal is carried on the resources at the plurality of moments; and
the first information further indicates a second phase, and the second phase is obtained based on the third downlink reference signal.

4. The method according to claim 3, wherein the first phase is obtained based on the difference between the first phase variation amount and the second phase variation amount, and the second phase is obtained based on a difference between the first phase variation amount and a third phase variation amount; wherein
the first phase variation amount is obtained based on the first downlink reference signal, the second phase variation amount is obtained based on the second downlink reference signal, and the third phase variation amount is obtained based on the third downlink reference signal.

5. The method according to any one of claims 1 to 4, wherein the first information comprises quantized bits of the first phase, and the quantized bits are obtained based on the first phase and a quantization spacing, wherein
the quantization spacing is indicated by third information from a network device; or
the quantization spacing is determined by a terminal device, the first information further comprises fourth information, and the fourth information indicates the quantization spacing.

6. The method according to any one of claims 1 to 5, wherein the first information further indicates a phase state and first duration that correspond to the first phase, and the phase state and the first duration are for determining the first phase.

7. The method according to any one of claims 1 to 6, wherein before receiving the first downlink reference signal and the second downlink reference signal, the method further comprises:
sending an uplink reference signal, wherein the first downlink reference signal and the second downlink reference signal are related to the uplink reference signal.

8. The method according to claim 7, wherein the uplink reference signal is for determining a pre-compensation coefficient, and the first downlink reference signal and the second downlink reference signal are reference signals obtained after pre-compensation based on the pre-compensation coefficient.

9. The method according to claim 7 or 8, wherein a time interval between either of the first downlink reference signal and the second downlink reference signal and the uplink reference signal is less than or equal to a preset time interval.

10. The method according to any one of claims 1 to 9, wherein the first downlink reference signal is from a first transmission reception point TRP, and the second downlink reference signal is from a second TRP.

11. The method according to claim 10, wherein before sending the first information, the method further comprises:
receiving data from coherent joint transmission between the first TRP and the second TRP, wherein the data from coherent joint transmission is obtained by preforming processing based on the first phase.

12. A communication method, comprising:
sending a first downlink reference signal, wherein the first downlink reference signal is carried on resources at a plurality of moments, and the first downlink reference signal is for obtaining a first phase;
receiving first information, wherein the first information indicates a first phase.

13. The method according to claim 12, wherein the method further comprises:
sending second information, wherein the second information is for configuring a terminal device to receive the first downlink reference signal and a second downlink reference signal, the second downlink reference signal is carried on the resources at the plurality of moments, and the first downlink reference signal and the second downlink reference signal are for obtaining the first phase.

14. The method according to claim 13, wherein
the first phase is a difference between a first phase variation amount and a second phase variation amount, or
the first phase is a first phase variation amount or a second phase variation amount, wherein
the first phase variation amount is obtained based on the first downlink reference signal, and the second phase variation amount is obtained based on the second downlink reference signal.

15. The method according to claim 14, wherein the first information further indicates a second phase, and
the second phase is a difference between the first phase variation amount and the third phase variation amount; or
the second phase is a third phase variation amount, wherein
the third phase variation amount is obtained based on a third downlink reference signal, and the third downlink reference signal is a downlink reference signal that is configured for the terminal device and that is carried on the resources at the plurality of moments.

16. The method according to any one of claims 12 to 15, wherein
the first information comprises quantized bits of the first phase, and the quantized bits are obtained based on the first phase and a quantization spacing, wherein
the quantization spacing is indicated by third information from a network device; or
the quantization spacing is determined by a terminal device, the first information further comprises fourth information, and the fourth information indicates the quantization spacing.

17. The method according to any one of claims 12 to 16, wherein the first information further indicates a phase state and first duration that correspond to the first phase, and the phase state and the first duration are for determining the first phase.

18. The method according to any one of claims 12 to 17, wherein before sending the first downlink reference signal, the method further comprises:
receiving an uplink reference signal, wherein the first downlink reference signal is related to the uplink reference signal.

19. The method according to claim 18, wherein the method further comprises:
determining a pre-compensation coefficient based on the uplink reference signal, and the first downlink reference signal is a reference signal obtained after pre-compensation based on the pre-compensation coefficient.

20. The method according to claim 18 or 19, wherein a time interval between the first downlink reference signal and the uplink reference signal is less than or equal to a preset time interval.

21. The method according to claim 20, wherein the method is performed by a first TRP, and before sending the first information, the method further comprises:
sending data from coherent joint transmission with a second TRP, wherein the data from coherent joint transmission is obtained by preforming processing based on the first phase.

22. A communication method, comprising:
receiving a first downlink reference signal and a second downlink reference signal, wherein both the first downlink reference signal and the second downlink reference signal are carried on resources at a plurality of moments; and
sending first information, wherein the first information indicates a first frequency; wherein
the first frequency is obtained based on at least one of the first downlink reference signal or the second downlink reference signal.

23. A communication method, comprising:
sending a first downlink reference signal, wherein the first downlink reference signal is carried on resources at a plurality of moments, and the first downlink reference signal is for obtaining a first frequency; and
receiving first information, wherein the first information indicates the first frequency.

24. A communication apparatus, configured to implement the method according to any one of claims 1 to 11, and 22.

25. The communication apparatus according to claim 24, wherein the communication apparatus comprises a terminal device or a chip.

26. A communication apparatus, configured to implement the method according to any one of claims 12 to 21, and 23.

27. The communication apparatus according to claim 26, wherein the communication apparatus comprises a network device or a chip.

28. A communication apparatus, comprising: at least one processor, wherein the processor is coupled to a memory;
the memory is configured to store a program or instructions; and
the at least one processor is configured to execute the program or the instructions, to cause the apparatus to implement the method according to any one of claims 1 to 11, and 22, or cause the apparatus to implement the method according to any one of claims 12 to 21, and 23.

29. A computer-readable storage medium, comprising a computer program, wherein when the computer program is run by one or more processors, an apparatus comprising the processor is caused to perform the method according to any one of claims 1 to 23.

30. A computer program product, wherein the computer program product comprises a computer program, and when the computer program is run, the method according to any one of claims 1 to 23 is implemented.
